# EUROPÄISCHE PATENTANMELDUNG

(11) **EP 4 138 271 A1**
(43) Veröffentlichungstag der Anmeldung: **22.02.2023**
(21) Anmeldenummer: 21191704.2
(22) Anmeldetag: 17.08.2021
(51) Int. Cl.: H02K 1/276, H02K 15/03, H02K 15/12

(54) **BLECHPAKET EINES ROTORS MIT UNTERSCHIEDLICHEN SEGMENTEN**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft einen Rotor (5) einer dynamoelektrischen permanenterregten Maschine (1) mit
- einer vorgebbaren Anzahl von Polen (27),
- wobei radial innerhalb jedes Poles (27) in seinem Sektor (14) ein oder mehrere axial verlaufende Bohrungen (22) im Blechpaket (30) vorgesehen sind,
- wobei das Blechpaket (30) Bleche (8) aufweist, deren Sektoren (14) mit zumindest zwei unterschiedlichen Polsektoren (81,82,83,84) ausgestattet sind und wobei das Blechpaket (30) in vorgebbarer axialer Reihenfolge und Drehung oder axialer Reihenfolge und Drehung und Umschlagung der Bleche (8), aufgebaut ist, wobei die Bleche (8) unabhängig von der Ausgestaltung der Sektoren (14) jeweils eine Wellenbohrung (26), jeweils axial fluchtende Bohrungen (22), identische Anzahl von Polen (27) bzw. Sektoren (14), axial fluchtende Ausnehmungen (21) und identischen Außendurchmesser aufweisen,
- wobei erste Polsektoren (81) Elemente zur Verteilung einer Vergussmasse oder eines Klebers innerhalb des Blechpakets aufweisen und/oder zweite Polsektoren (82) Halteelemente zur mechanischen Festigkeit des Blechpakets (30) aufweisen,
- wobei die Zuflusskanäle (23), die Flusssperren (13), die Bohrungen (22) und die im Wesentlichen axial verlaufenden Spalte zwischen dem Permanentmagneten (9) und dem jeweilig ihn umgebenden Blechpaket (3) durch einen Kleber und/oder eine Vergussmasse ausgefüllt sind.

## Beschreibung

Die Erfindung betrifft einen Rotor einer permanenterregten dynamoelektrischen Maschine, ein Verfahren zur Herstellung eines Rotors einer permanenterregten dynamoelektrischen Maschine, eine permanenterregte dynamoelektrischen Maschine mit einem derartigen Rotor, als auch eine Verwendung einer permanenterregten dynamoelektrischen Maschine.

Industrielle Niederspannungsmotoren (<1KV Nennspannung) vor allem in den Wirkungsgradklassen IE4 und höher, weisen üblicherweise Rotoren mit Permanentmagneten auf. Dabei werden die Permanentmagnete in die hierfür vorgesehen Taschen des Blechpakets des Rotors eingebracht (sogenannte vergrabene Permanentmagnete) .

Nach dem Einbringen der Permanentmagnete in die Taschen müssen diese Permanentmagnete mit dem Blechpaket des Rotors fixiert werden. Damit soll ein Spiel zwischen Blechpaket und Permanentmagneten vermieden werden, das bei mechanischen Einwirkungen, wie Vibrationen und Fliehkräften, während des Betriebs der permanenterregten dynamoelektrischen Maschine oder aufgrund von Magnetkräfte eine Positionsänderung der Permanentmagnete verursacht.

Üblicherweise werden die Permanentmagnete hierfür mittels eines reaktiven Kunststoffklebers in die Taschen geklebt.

Eine weitere Möglichkeit die Permanentmagnete in der Tasche zu fixieren ist das spätere Vergießen der mit den Permanentmagneten bestückten Taschen mittels eines reaktiven Harzes, welches im Anschluss durch thermische Einwirkung (Ofen, z.B. 140°C für 2h) gehärtet werden muss. Zum einen ist hierbei das Aufheizen und Abkühlen des gesamten Rotors ein zeit- und kostspieliger Prozessschritt zum anderen können derartige Temperaturen zu einer Teilentmagnetisierung der Permanentmagnete führen.

Die Auslegung von derartigen Blechen für Rotoren ist ein Kompromiss aus unterschiedlichen, miteinander konkurrierenden teilweise sogar entgegenstehenden Anforderungen hinsichtlich der elektromagnetischen und mechanischen Eigenschaften und der Eignung zur prozesssicheren Produktion von derartigen Rotoren.

Bisher folgt die Auslegung der derartiger Rotorbleche streng symmetrisch, wobei ein Kompromiss aus elektromagnetischen, mechanischen und fertigungstechnisch relevanten Eigenschaften angestrebt wird. Oftmals wird gezielt nach einer Eigenschaft optimiert, was aber Nachteile bei anderen Anforderungen nach sich zieht. Beispielsweise führt eine Optimierung hinsichtlich fertigungstechnischer Eigenschaften, wie größere Spalte zum Fügen und Verkleben der Magneten, zu einer Reduzierung des Wirkungsgrades der permanenterregten dynamoelektrischen Maschine. Eine Optimierung des Wirkungsgrades führt aber zu einer eingeschränkten Rotorfestigkeit und damit reduzierter Drehzahltauglichkeit einer dynamoelektrischen Maschine und Problemen bei der Produktion des Rotors.

Eine Möglichkeit der Fixierung von Permanentmagneten ist das vorherige Einbringen eines pastösen Klebstoffes in die Tasche, welcher dann durch den später eingeschobenen Permanentmagneten derart verdrängt wird, dass er sich um den Permanentmagneten schmiegt. Dieses Einsetzen der Permanentmagnete in das pastöse Material führt allerdings zu einer gewissen Positionsungenauigkeit innerhalb einer Tasche, da sich die verdrängte Paste nicht gleichförmig um den Magneten schmiegt und sich somit nur punktuelle Verklebungen einstellen. Das Handling von aufmagnetisierten Permanentmagnete ist dabei nicht trivial und kann aufgrund der Magnetkräfte nicht ordentlich, in der wünschenswerten Weise, durchgeführt werden, ohne dass nach jedem Magneteinschub das Werkzeug einer Hilfsvorrichtung von der voreingebrachten Klebe-Paste gereinigt werden muss.

Die DE 10 2009 054 584 A1 zeigt einen Rotor für eine Elektromaschine, umfassend übereinander zu einem Lamellenpaket angeordnete Lamellen, in dem Lamellenpaket ausgebildete Taschen zur Aufnahme von Permanentmagneten und in den Taschen angeordnete Permanentmagnete, die stoffschlüssig mit einem Verbindungsstoff an dem Lamellenpaket befestigt sind, wobei das Lamellenpaket mit wenigstens einer Ausnehmung zum Einbringen des Verbindungsstoffs versehen ist.

Nachteilig dabei ist u.a., dass die dort als Ausnehmungen bezeichneten Steigkanäle im Bereich des magnetischen Flusses angeordnet sind und somit zu einer vergleichsweise geringen Effizienz einer permanenterregten dynamoelektrischen Maschine mit einem derartigen Rotor führen.

Ausgehend davon liegt der Erfindung die Aufgabe zugrunde einen Rotor zu schaffen, um eine Effizienz- und Wirkungsgradsteigerung einer permanenterregten dynamoelektrischen Maschine zu erhalten. Dabei soll die Herstellung eines derartigen Rotors vergleichsweise einfach sein, und vergleichsweise wenig Prozessschritte bei der Herstellung erfordern. Außerdem soll die Verwendung des Rotors in einer permanenterregten dynamoelektrischen Maschine bei unterschiedlichsten Antriebsaufgaben vergleichsweise günstige Verbrauchsdaten liefern.

Die Lösung der gestellten Aufgabe gelingt durch einen Rotor einer dynamoelektrischen permanenterregten Maschine mit
- einer vorgebbaren Anzahl von Polen,
- wobei die Pole des Rotors jeweils durch einen oder mehrere Permanentmagnete gebildet sind,
- wobei die Permanentmagnete in im Wesentlichen axial verlaufenden, umfänglich geschlossenen Ausnehmungen eines Blechpakets angeordnet sind und Pole bilden,
- wobei die Ausnehmungen, Bereiche von Taschen, zur Aufnahme der Permanentmagnete und Flusssperren, zur Führung eines Magnetflusses aufweisen, in welche Ausnehmungen zumindest abschnittsweise Halteelemente ragen,
- wobei radial innerhalb jedes Poles in seinem Sektor ein oder mehrere axial verlaufende Bohrungen im Blechpaket vorgesehen sind,
- wobei das Blechpaket Bleche aufweist, deren Sektoren mit zumindest zwei unterschiedlichen Polsektoren ausgestattet sind und wobei das Blechpaket in vorgebbarer axialer Reihenfolge und Drehung oder axialer Reihenfolge und Drehung und Umschlagung der Bleche, aufgebaut ist, wobei die Bleche unabhängig von der Ausgestaltung der Sektoren jeweils eine Wellenbohrung, jeweils axial fluchtende Bohrungen, identische Anzahl von Polen bzw. Sektoren, axial fluchtende Ausnehmungen und identischen Außendurchmesser aufweisen,
- wobei erste Polsektoren Elemente zur Verteilung einer Vergussmasse oder eines Klebers innerhalb des Blechpakets aufweisen und/oder zweite Polsektoren Halteelemente zur mechanischen Festigkeit des Blechpakets aufweisen,
- wobei die Zuflusskanäle, die Flusssperren, die Bohrungen und die im Wesentlichen axial verlaufenden Spalte zwischen dem Permanentmagneten und dem jeweilig ihn umgebenden Blechpaket durch einen Kleber und/oder eine Vergussmasse ausgefüllt sind.

Die Lösung der gestellten Aufgabe gelingt auch durch ein Verfahren zur Herstellung eines erfindungsgemäßen Rotors einer dynamoelektrischen permanenterregten Maschine durch folgende Schritte:
- Paketieren eines Blechpakets aus axial geschichteten identischen Blechen, dessen Sektoren zumindest mit zwei unterschiedlichen Polsektoren ausgestattet sind, wobei die Bleche durch axiale Reihenfolge und Drehung oder axialer Reihenfolge und Drehung und Umschlagung das Blechpaket bilden, wobei die Bleche unabhängig von der Ausgestaltung der Sektoren jeweils eine Wellenbohrung, jeweils axial fluchtende Bohrungen, identische Anzahl von Polen bzw. Sektoren, axial fluchtende Ausnehmungen und identischen Außendurchmesser aufweisen,
- wobei erste Polsektoren Elemente zur Verteilung einer Vergussmasse oder eines Klebers innerhalb des Blechpakets aufweisen und zweite Polsektoren Halteelemente zur mechanischen Festigkeit des Blechpakets aufweisen,
- Einsetzen von Permanentmagneten in die Ausnehmungen,
- Anbringen einer Verteilscheibe an zumindest einer Stirnseite des Blechpakets, mit zumindest einer Zuführöffnung und zumindest einem Ringkanal auf der dem Blechpaket zugewandten Seite, der die Bohrungen bedeckt,
- Vergießen der Hohlräume des Blechpakets über die Zuführöffnung und den Ringkanal der Verteilscheibe, die Bohrungen, die Zuflusskanäle, die Flusssperren, und die im Wesentlichen axial verlaufenden Spalte zwischen dem Permanentmagneten und dem jeweilig ihn umgebenden Blechpaket, durch einen Kleber und/oder eine Vergussmasse, so dass zumindest die Permanentmagnete des Rotors fixiert werden.

Die Lösung der gestellten Aufgabe gelingt auch durch eine dynamoelektrische Maschine, insbesondere permanenterregte Synchronmaschine mit einem erfindungsgemäßen Rotor.

Die Lösung der gestellten Aufgabe gelingt auch durch die Verwendung einer dynamoelektrischen Maschine, insbesondere einer permanenterregten Synchronmaschine bei Kompressoren, Verdichtern, Pumpen, Lüftern, Antrieb von Förderbändern, in der Nahrungsmittelindustrie und in maritimen Anwendungen, wo ein Dauerbetrieb und damit hohe Effizienz des Antriebs notwendig ist.

Erfindungsgemäß wird nun ein Rotor bereitgestellt, der einen Kompromiss aus unterschiedlichen, miteinander konkurrierenden Anforderungen hinsichtlich der elektromagnetischen und mechanischen Eigenschaften und der Eignung zur prozesssicheren Produktion von derartigen Rotoren bildet. Dies führt die zu einer Effizienz- und Wirkungsgradsteigerung einer permanenterregten dynamoelektrischen Maschine.

Erfindungsgemäß führt die Entflechtung von miteinander konkurrierenden Anforderungen hinsichtlich der elektromagnetischen und mechanischen Eigenschaften und der Eignung zur prozesssicheren Produktion von derartigen Rotoren bei nahezu identischen Blechen zu unterschiedlich gestalteten Sektoren der Bleche und damit des Blechpakets eines Rotors. Dies gewährleistet neben der vergleichsweise einfachen Fertigung des Rotors einen effizienten Betrieb einer dynamoelektrischen permanenterregten Maschine.

Als Blechpaket wird dabei der aktive Teil des Rotors verstanden, der axial gestapelte Bleche aufweist und mit Permanentmagneten versehen ist und zur Drehmomentbildung beiträgt, nicht jedoch eventuelle Verteilscheiben und/oder Abschlussscheiben am stirnseitigen Ende des Blechpakets des Rotors.

Als Ausnehmungen sind dabei Ausstanzungen der einzelnen Bleche zu verstehen, die paketiert, axial hintereinander angeordnet sind. Die Ausnehmungen weisen sowohl Taschen als auch die Flusssperren auf. Die Taschen sind zur Aufnahme der oder des Permanentmagneten vorgesehen. In den Raum der Ausnehmungen ragen optional Halteelemente, wie Stege, Randstege, Haltestege und/oder Haltenasen zur ergänzenden Fixierung und Halterung der Permanentmagnete während der Fertigung und/oder im Betrieb der dynamoelektrischen Maschine gegenüber Fliehkraftbeanspruchungen.

Durch die Optimierung der jeweiligen Gestaltung eines Sektors auf möglichst wenige Anforderungen werden die elektromagnetischen und mechanischen Eigenschaften des mit Permanentmagneten bestückten Rotors verbessert. Mit anderen Worten - Sektoren werden im Wesentlichen entweder nach elektromagnetischen Anforderungen oder nach mechanischen Anforderungen optimiert. Dabei gibt es Sektoren mit ersten Polsektoren des Bleches, die für die Zufuhr und Verteilung einer Vergussmasse oder eines Klebers in die Ausnehmungen ausgelegt sind - also implizit nach elektromagnetischen Gesichtspunkten. Daneben gibt es Sektoren mit zweiten Polsektoren des Bleches, die im Wesentlichen auf eine mechanische Stabilisierung u.a. des gesamten Blechpakets ausgelegt sind. Diese jeweiligen Aufgaben der ersten und zweiten Polsektoren können jeweils noch weiter aufgeteilt werden, so dass es Ausstattungen als dritte, vierte oder noch weitere Polsektoren geben kann. So können dritte Polsektoren partielle Ausstanzungen aufweisen. Vierte Polsektoren können verstärkte Haltestege aufweisen.

Damit ergeben sich in einer nicht abschließenden Aufzählung folgende mögliche Blechpakete.

Jedes Blech ist bezüglich seines Blechschnittes identisch. Jeder Pol nimmt einen Sektor ein, der eine vorgegebene Ausgestaltung aufweist. Eine Ausgestaltung nach einem ersten Polsektor ist für die Verteilung einer Vergussmasse zuständig und weist deshalb Zuflusskanäle auf, optional können auch partielle Ausstanzungen der Taschen im ersten Polsektor ausgebildet sein.

Eine Ausgestaltung nach einem zweiten Polsektor ist für die mechanische Stabilität zuständig, wie Randstege, Haltestege; Haltenasen etc.

Eine Ausgestaltung nach einem dritten Polsektor ist für die Verteilung einer Vergussmasse zuständig, indem es in den Taschen partielle Ausstanzungen aufweist.

Eine Ausgestaltung nach einem vierten Polsektor weist lediglich die Grundausstattung auf, gegebenenfalls erweitert durch Ausstattungsmerkmale nach dem ersten und/oder zweiten Polsektor. Es hat also jedes Blech dieses Blechpakets einen gleichen Blechschnitt, also eine in Umfangsrichtung betrachtet vorgegebene Abfolge dieser ersten, zweiten, dritten und vierten Polsektoren, wobei die elektromagnetischen und mechanischen Anforderungen an das Blechpaket durch eine erfindungsgemäße Anordnung, also Drehung oder Drehung und Umschlagung der jeweiligen Bleche beim Paketieren erreicht wird.

Ebenso ist eine Ausgestaltung eines Bleches nur mit ersten oder zweiten Polsektoren und mit vierten Polsektoren möglich. Mit anderen Worten - es liegt dann ein Blechpaket vor, das schwerpunktmäßig den elektromagnetischen oder den mechanischen Anforderungen genügt, ansonsten Bleche mit Sektoren mit der Grundausstattung aufweisen.

In einer anderen Ausführung ist wiederum jedes Blech bezüglich seines Blechschnittes identisch. Dabei hat jeder Pol einen Sektor, der eine vorgegebene Ausgestaltung aufweist. Eine Ausgestaltung nach einem ersten Polsektor ist für die Verteilung einer Vergussmasse zuständig und weist deshalb Zuflusskanäle auf, optional können auch partielle Ausstanzungen der Taschen im ersten Polsektor ausgebildet sein.

Eine Ausgestaltung nach einem zweiten Polsektor ist für die mechanische Stabilität zuständig, wie Randstege, Haltestege; Haltenasen etc.

Eine Ausgestaltung nach einem vierten Polsektor weist lediglich die Grundausstattung auf, gegebenenfalls erweitert durch Ausstattungsmerkmale nach dem ersten und/oder zweiten Polsektor. Es hat also jedes Blech dieses Blechpakets einen gleichen Blechschnitt, also eine in Umfangsrichtung betrachtet vorgegebene Abfolge dieser ersten, zweiten und vierten Polsektoren, wobei die elektromagnetischen und mechanischen Anforderungen an das Blechpaket durch eine erfindungsgemäße Anordnung, also Drehung oder Drehung und Umschlagung der jeweiligen Bleche beim Paketieren erreicht wird.

In einer anderen Ausführung ist wiederrum jedes Blech bezüglich seines Blechschnittes identisch. Dabei hat jeder Pol einen Sektor, der eine vorgegebene Ausgestaltung aufweist. Eine Ausgestaltung nach einem ersten Polsektor ist für die Verteilung einer Vergussmasse zuständig und weist deshalb Zuflusskanäle auf, optional können auch partielle Ausstanzungen der Taschen im ersten Polsektor ausgebildet sein.

Eine Ausgestaltung nach einem zweiten Polsektor ist für die mechanische Stabilität zuständig, wie Randstege, Haltestege; Haltenasen etc. Es hat also jedes Blech dieses Blechpakets einen gleichen Blechschnitt, also eine in Umfangsrichtung betrachtet vorgegebene Abfolge dieser ersten und zweiten Polsektoren, wobei die elektromagnetischen und mechanischen Anforderungen an das Blechpaket durch eine erfindungsgemäße Anordnung, also Drehung oder Drehung und Umschlagung der jeweiligen Bleche beim Paketieren erreicht wird.

Jeder Pol des Rotors weist zumindest eine Ausnehmung auf. Bei mehreren Ausnehmungen pro Pol sind diese V-förmig, U-förmig oder dachförmig angeordnet. Jede Tasche einer Ausnehmung weist einen oder mehrere Permanentmagnete auf.

Jeder Pol eines Blechpakets ist in einem Sektor angeordnet und ist unabhängig von der Ausgestaltung mit einem jeweiligen Polsektor mit der identischen "Menge" an Permanentmagneten versehen.

Den einzelnen Blechen sind nun neben den gemeinsamen Grundausstattungen, wie Wellenbohrung, axial fluchtende Ausnehmungen, axial fluchtende Bohrungen, gleiche Anzahl von Polen und gleicher Außendurchmesser, zur Optimierung der Einzelanforderungen zusätzliche spezifische Eigenschaften (wie erste Polsektoren, zweite Polsektoren, etc.) zumindest einiger ihrer Pole bzw. Sektoren zugewiesen.

Mit den ersten, zweiten, dritten und vierten Polsektoren sind dabei Ausstattungsvarianten der jeweiligen Sektoren bzw. Pole zu verstehen.

Erste Polsektoren, die Schlitze von den Bohrungen zu den Ausnehmungen aufweisen, um im axialen Wechsel mit anderen Blechen radiale Zuführkanäle zu den Ausnehmungen zu bilden. Die Zuführkanäle weisen je nach Blechdicke und vorgesehenem Kleber oder Vergussmaterial eine axiale Dicke von ein oder mehrere Blechdicken auf. Bei den ersten Polsektoren der Bleche wird durch die Formgebung und Dimensionierung des Schlitzes eine Bildung eines Zuflusskanales von einer Bohrung zu einer Ausnehmung vorgegeben. Bei der Dimensionierung der Schlitze sind ebenfalls die einsetzbaren Kleber und Vergussmaterialien zu beachten.

Die Zuflusskanäle erlauben eine zuverlässige Zufuhr einer Vergussmasse in die Ausnehmungen und damit ein sicheres Fixieren (z.B. Verkleben/Vergießen) der Permanentmagnete in den jeweiligen Taschen. Die Verabreichung des Klebers oder der Vergussmasse erfolgt mit oder ohne Druck.

Zweite Polsektoren weisen nun Eigenschaften, insbesondere Halteelemente auf, die zur mechanischen Stabilisierung des Blechpakets beitragen. Diese Halteelemente sind in Form von Haltestegen und/oder Haltenasen und/oder Randstegen ausgebildet, um die mechanische Stabilität des Blechpakets zu gewährleisten und die Permanentmagnete zumindest bei der Fertigung, also dem Vergussprozess, zu fixieren.

Des Weiteren können erste und/oder dritte Polsektoren im Bereich der Ausnehmungen, insbesondere den Taschen partielle Ausstanzungen aufweisen, die eine Erweiterung der Tasche darstellen, und die einen Verklebevorgang und/oder Vergießen erleichtern. Diese partiellen Ausstanzungen an den Taschen, die durch Form und Lage definierte Kapillaren bilden, tragen zur sicheren Fixierung der Permanentmagnete durch Verkleben/Vergießen in den Taschen bei. Damit erhält man eine größere Auswahl hinsichtlich der Viskosität der einsetzbaren Kleber/ Vergussmassen.

Um den Verteilvorgang innerhalb einer Ausnehmung besonders effizient zu gestalten sind partielle Ausstanzungen zusätzlich auch bei zweiten Polsektoren und/oder vierten Polsektoren möglich.

Die Grundausstattung weist nun folgende Eigenschaften auf: Wellenbohrung, Ausnehmungen, Bohrungen, gleiche Anzahl von Polen und gleicher Außendurchmesser. Die darüberhinausgehenden Eigenschaften, wie Schlitze zu Gestaltung der Zuflusskanäle, Halteelemente zur mechanischen Verstärkung und partielle Ausstanzungen, sind bei dem jeweiligen Blechen nur bei einem Pol, bei mehreren Polen, aber nicht bei allen Polen bzw. Sektoren umgesetzt.

Falls die darüberhinausgehenden Eigenschaften, wie Schlitze zu Gestaltung der Zuflusskanäle, Halteelemente zur mechanischen Verstärkung und partielle Ausstanzungen bei nur einem oder einigen - aber nicht allen - Polen eines der Bleche vorliegen sollten, sind diese Eigenschaften im axialen Verlauf des Blechpakets allen Polen zuweisbar. Dabei wird während des Paketierens durch Verdreh- und/oder Umschlagspaketierung der einzelnen Bleche diese Eigenschaften gezielt den vorgegebenen Polen zugewiesen.

Verdreht oder verdreht und umgeschlagen oder nur umgeschlagen wird dabei durch einen Winkel, der sich aus der Polzahl p des Rotors ergibt.

Außerdem beeinflusst die Anzahl der Sektoren mit einer Ausgestaltung nach einem ersten Polsektor und/oder zweiten Polsektor die Häufung von Drehung und/oder Umschlagen der Bleche im axialen Aufbau des Blechpakets. Mit anderen Worten - bei einem 8-poligen Rotor ist bei einer Ausgestaltung nur eines Poles mit einem ersten Polsektor öfter eine Drehung vorzusehen als bei Ausgestaltung zwei oder mehrerer Pole mit einem ersten Polsektor.

Ein weiterer Vorteil ist, dass durch das Verdrehen der Bleche Anisotropien aus den Materialeigenschaften des Bleches (Festigkeit und magnetische Eigenschaften sind beispielsweise abhängig von der Walzrichtung) egalisiert werden. Über die axiale Länge des Blechpakets des Rotors betrachtet führt dies zu einer Homogenisierung der magnetischen Eigenschaften des gesamten Blechpakets, was zur Steigerung der Effizienz und zur Laufruhe beiträgt.

Weitere Optimierungen des jeweiligen Polsektors eines Bleches sind hinsichtlich mechanischer Festigkeit nach einem zweiten Polsektor die Ausgestaltung der Halteelemente, der Randbegrenzungen der Flusssperren und der Stege, um die Permanentmagnete in den Taschen der Ausnehmungen zu halten. Dabei kann die Anzahl und Formgebung der Halteelemente, Stege, Haltenasen und Randstege je nach Anforderung angepasst werden.

Die im Rotor vorhandenen Ausnehmungen weisen dann im axialen Verlauf betrachtet alle Möglichkeiten der Einzeloptimierung auf. Je Drehzahlanforderungen und damit verbundenen Fliehkraftbeanspruchungen, dem vorgesehenen Vergussmaterial etc. sind dementsprechend die Polsektoren (erster, zweites, dritter oder vierter Polsektor) und deren axiale Reihung als auch ggf. deren Verdrehung und/oder Umschlagung im Rahmen der Paketierung anzuordnen.

Zusätzlich können die Bleche, um die mechanische Stabilität des Blechpakets weiter zu verbessern, nach vorgebbarer axialer Reihenfolge, gegebenenfalls unter Verdrehen und/oder Umschlagen zumindest zum Teil und/oder abschnittsweise miteinander axial verklebt werden.

Damit können gegebenenfalls Stege, wie Haltestege, Randstege, insbesondere bei den zweiten Polsektoren, die der Stabilisierung des Blechpakets dienen, entfallen oder zumindest mit geringeren Dimensionen ausgeführt werden, was den magnetischen Streufluss reduziert.

Im axialen Verlauf des Blechpakets werden durch die gezielte Optimierung einzelner Ausnehmungen der jeweiligen Polsektoren, insbesondere Taschen hinsichtlich einer Anforderung, die negativen Auswirkungen auf andere Anforderungen deutlich reduzieren.

Ein Paketieren der Bleche, also die axiale Reihung der Bleche und/oder deren Verdrehen und/oder Umschlagen kann auf einer Hilfswelle erfolgen. Ebenso ist es möglich, die Bleche axial miteinander zu verkleben.

Ebenso ist Stanzpaketieren der Bleche möglich, um ein Blechpaket zu erhalten, in das die Permanentmagnete einsetzbar sind.

Zusätzliches Paketieren erfolgt dann, wenn sich das Blechpaket auf der eigentlichen Welle befindet. Dabei wird das Blechpaket zwischen mittels zweier Scheiben zusammengepresst. Dies können zwei Verteilscheiben oder eine Verteilscheibe und eine Abschlussscheibe sein.

Eine Paketierung des Blechpakets kann auch über Zugankerverbindungen erfolgen.

Um nun einen Kleber oder eine Vergussmasse in das Blechpaket des Rotors über die Bohrungen einbringen zu können, ist zumindest an einer Stirnseite des Blechpakets eine Verteilscheibe vorgesehen. Diese wird, nachdem sich die Permanentmagnete in ihren Taschen befinden, angebracht, um den Kleber oder die Vergussmasse einzubringen.

Zumindest eine der beiden Scheiben ist dabei eine Verteilscheibe.

Das Blechpaket und/oder die Verteilscheiben werden vorzugsweise auf die Welle geschrumpft. Ebenso sind andere Möglichkeiten vorhanden, das Drehmoment vom Blechpaket auf die Welle zu übertragen, wie Passfederverbindungen etc.

Die Verteilscheibe weist auf der dem Blechpaket des Rotors zugewandten Seite zumindest einen umlaufenden zum Blechpaket hin offenen Ringkanal auf, um den Kleber oder die Vergussmasse über die Bohrungen und die jeweiligen Zuflusskanäle der jeweiligen Ausnehmung zukommen zu lassen.

Auf der dem Blechpaket abgewandten Seite der Verteilscheibe ist zumindest eine Injektionsöffnung, also eine Zuführung vorgesehen, um den Ringkanal und damit das Blechpaket zu speisen. Optional weist der Ringkanal im Bereich einer Bohrung und/oder einer Flusssperre eines Pols des Rotors Erweiterungen auf, um ausreichend Vergussmasse für den jeweiligen Pol bzw. dessen mit Permanentmagneten versehenen Ausnehmung bereitstellen zu können.

Der Ringkanal und optional dessen Erweiterung schließen mit der Stirnseite des Blechpakets formschlüssig und dicht ab, um einen dementsprechenden Druck und damit ggf. die erforderlichen Scherkräfte für das jeweilige Vergussmaterial aufbauen zu können.

Bei einem möglichen Verfahren zum Vergießen des Blechpakets des Rotors weist die Vergussmasse thixotropischem Verhalten auf, wobei die Viskosität infolge eines äußeren Einflusses (z.B. Druck) abnimmt und nach beendigter Beanspruchung wieder in die Ausgangsviskosität zurückkehrt.

Es sind aber auch andere Vergussmassen oder Kleber möglich.

Bei konstanter Scherung (Druck) nimmt mit der Zeit die Viskosität der Vergussmasse ab, nach Beendigung der Scherbelastung steigt die Viskosität dieser Vergussmasse zeitabhängig wieder an.

Eine Thixotropierung der Vergussmasse wird u.a. durch Zugabe und Dispergieren von pyrogener Kieselsäure Aerosil im Bereich zwischen 0,1-0,5 Vol.-% erreicht.

Bevor die Vergussmasse über eine Leitung oder Schlauch dem Rotor über die Verteilscheibe zugeführt wird, werden deren Bestandteile von mindestens zwei getrennt vorliegenden Komponenten durch Relativbewegung so umpositioniert, dass eine gleichmäßige und klar definierte Verteilung der zu mischenden Komponenten vorliegt.

Das Basisharzmaterial der Vergussmasse entspricht hierbei einem zweikomponentigen Reaktivharz auf Basis von Epoxy/Amin oder z.B. Polyurethan/Isocyanat. Eine Gelierung bei Raumtemperatur ist hierbei nach wenigen Minuten bis Stunden einstellbar, so dass ohne zusätzliche Erwärmung (und damit einhergehender weiterer Verflüssigung des Harzgemisches) eine weitgehende Verfestigung der Masse eintritt.

Es stellt sich damit bei geringen Scherkräften (ca. 10 Pa) eine Scherviskosität von ca. 10^5-10^7 mPas ein. Bei erhöhten Scherkräften (ca. 200 Pa) tritt eine Scherviskosität von ca. 10^2-10^4 mPas ein. Diese Scherkräfte werden durch Druck in die Vergussmasse eingeleitet.

Eine Erholung des Materials, respektive der Viskosität, ergibt sich nach Abnahme der Scherkräfte (Abnahme des Druckes) innerhalb weniger Minuten, so dass es zu einer Selbstverfestigung der Vergussmasse kommt und keine Fließwege durch dünne Spalte, insbesondere zwischen den Einzelblechen des Blechpakets, des Rotors mehr entstehen.

Der Volumenschrumpf eines derartig gefüllten Rotors liegt bei unter 1%.

Die vorzugsweise raumtemperaturhärtende Vergussmasse kann, neben einem stark thixotropierten rheologischen Verhalten, durch geeignete Additive wärmeleitfähig (>0,5 W/mK) eingestellt werden. Diese Additive werden vor der Zuführung in den Rotor, insbesondere der Verteilscheibe der Vergussmasse, beigemischt. Dies führt im Betrieb der dynamoelektrischen Maschine zu einem verbesserten Wärmeabfuhr aus den Permanentmagneten, da diese durch Wirbelströme und/oder Luftspaltharmonischen aufgeheizt werden. Damit sind die Permanentmagnete mit vergleichsweise verbesserter Wärmeleitfähigkeit an das Blechpaket des Rotors gekoppelt.

Die Wärmeleitfähigkeit der Vergussmasse oder des Klebers kann durch Zugabe oder Zumischen verschiedener Füllstoffe erreicht werden. Die dabei vorgesehenen Additive sind Quarzmehl, Quarzgut, Alox, Kreide. Die einzelnen Komponenten sind zusammen oder auch einzeln den Füllstoffen (Vergussmasse, Kleber) beimischbar und können somit bis zu 40 Vol.% der gesamten Vergussmasse bzw. Klebers ausmachen.

Vorteilhafterweise erfolgt die Bestückung des Rotors mit Vergussmasse als aufsteigender Verguss bei erhöhtem Vergussdruck. Dabei ist die Achse des Rotors um einen vorgegebenen Winkel gegenüber der Horizontalen ausgerichtet, vorzugsweise 90°.

Ebenso verhält es sich mit weiteren Klebermaterialien.

Durch die aufsteigende Füllmasse ist eine blasenfreie Applikation gewährleistet.

Zur Mischung wird ein statisches/dynamisches Mischrohr verwendet, um das Reaktivgemisch in situ zu mischen und direkt im Anschluss über die Verteilscheibe auf einer Stirnseite des Rotors über die Bohrungen in den Rotor, insbesondere das Blechpaket zu applizieren.

Es können auch auf beiden Stirnseiten des Rotors Verteilscheiben vorgesehen sein, um eine Bestückung des Rotors von beiden Seiten vorzunehmen. Dabei sind die Verteilscheiben entweder identisch oder derart ausgebildet, dass jede Verteilscheibe lediglich die Hälfte der Pole des Rotors mit Vergussmasse versieht. Eine beidseitige Beschickung mit Vergussmasse kann vor allem bei axial langen Rotoren von Vorteil sein.

Über einen oder mehrere geeignete Injektionsanschlüsse an der Verteilerscheibe können Drücke von bis zu 10 bar, vorzugsweise 4,5 bar appliziert werden, wodurch die frisch gemischte, thixotropierte Vergussmasse fließfähig wird und axial, insbesondere axial aufsteigend, in die verbleibenden geometrischen Zwischenräume des Rotors gelangt.

Als Zwischenräume sind dabei die Flusssperren, die Spalte zwischen den Permanentmagneten und den jeweiligen Blechen, die Zuführkanäle und die Bohrungen, aber nicht oder fast nicht die Schlitze zwischen den Einzelblechen senkrecht zur Achse gemeint.

Nach der vollständigen Befüllung der Ausnehmungen wird der Druck abgelassen. Eine Detektion, dass das Blechpaket mit den entscheidenden Zwischenräumen "voll" ist, erfolgt über den statischen im Vergleich zu dem dynamischen Druck (Detektion z.B. über Druckaufbau dynamischer vs. statischer Druck).

Ebenso ist eine optische Kontrolle möglich.

Die Vergussmasse im Rotor geliert danach drucklos bei Raumtemperatur und härtet innerhalb von 24 Stunden vollständig aus.

Es wird also erfindungsgemäß der Rotor mit seinen Permanentmagneten, vorzugsweise mit einer thixotropierenden Vergussmasse, vergossen, welche bei Raumtemperatur geliert und vollständig härtet.

Durch die hohe Füllung und Nutzung von Thixotropieradditiven können mittels eines Druckverfahrens die Taschen aufsteigend gefüllt werden, ohne dass jedoch die Reaktivmasse durch kleine Schlitze, wie z.B. zwischen den Einzelblechen, entweichen kann.

Eine Weiterarbeit an und mit dem Rotor ohne mechanische Belastung ist schon nach ca. 1 Stunde möglich. Ein Durchdringen des Materials, also der Vergussmasse durch die Einzelbleche, ist durch die Thixotropierung der Vergussmasse verhindert, so dass auf einen vorangehenden Lackierprozess der außenliegenden Mantelfläche verzichtet werden kann.

Eine geeignete Verteilscheibe, welche im Vergussprozess zumindest an einer Stirnseite des Blechpakets des Rotors mit vorgesehen wird, verbindet über eine oder mehrere Zuführungen an der Verteilscheibe, einen Ringkanal mit allen vorgesehenen Erweiterungen über die Bohrungen, um durch eine einzige Injektion mit einem Füllvorgang den Rotor zu "befüllen".

Die Verteilscheibe erfüllt somit mehrere Funktionen. Zum einen Paketieren des Blechpakets auf der Welle, Verteilung der Vergussmasse bzw. Klebers und als optionale Möglichkeiten zusätzlich den Rotor zu wuchten. Dabei wird über Materialentnahme an der Verteilscheibe oder zusätzlich anbringbare Wuchtgewichte an der Verteilscheibe die Wuchtung des Rotors durchgeführt.

Diese Verteilscheibe wird somit stirnseitig und formschlüssig vorab an das Blechpaket angebracht und kann im Nachgang der Vergießprozesses auch zur Wuchtung des Rotors genutzt werden.

Um die Wuchtung nachhaltig durchzuführen, muss die Verteilscheibe am Blechpaket des Rotors verbleiben.

Eine mit einem derartigen Rotor ausgestattete permanenterregte Synchronmaschine weist eine hohe Effizienzklasse auf und ist somit für einen Antrieb, vor allem für den Dauerbetrieb von Kompressoren, Verdichtern, Lüftern, Förderbändern etc., geeignet.

Die Erfindung sowie weitere Ausgestaltungen der Erfindung werden anhand prinzipiell dargestellter Ausführungsbeispiele näher erläutert, darin zeigen:
- FIG 1: einen prinzipiellen Längsschnitt einer dynamoelektrischen Maschine,
- FIG 2 bis 6: Bleche mit unterschiedlichen Polsektoren,
- FIG 7 bis 9: unterschiedliche Polsektoren,
- FIG 10, 11: Anordnung von Sektoren von Rotoren unterschiedlicher Polzahl,
- FIG 12, 13: eine perspektivische Teilansicht einer Ausnehmung eines Pols des Rotors,
- FIG 14: eine Teilansicht eines Querschnitts einer dynamoelektrischen Maschine,
- FIG 15: einen Längsschnitt durch einen erfindungsgemäßen Rotor,
- FIG 16: eine Verteilscheibe,
- FIG 17 bis 27: Ausgestaltungen von Polen des Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

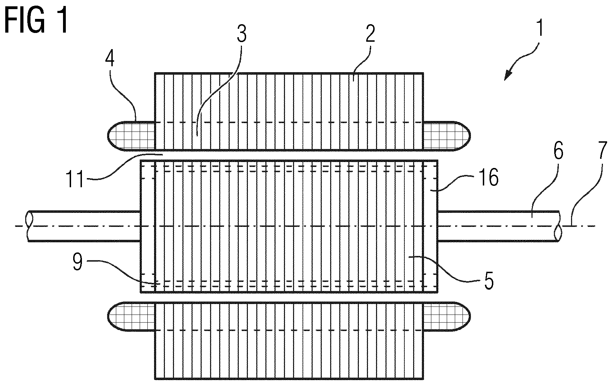

FIG 1 zeigt in einer prinzipielle Längsdarstellung eine dynamoelektrische Maschine 1, in diesem Fall eine permanenterregte Synchronmaschine. Diese permanenterregte Synchronmaschine weist einen Stator 2 auf, der in nicht näher dargestellten Nuten ein Wicklungssystem 3 aufweist, das an den Stirnseiten des Stators 2 einen Wickelkopf 4 ausbildet. Durch elektromagnetische Wechselwirkung über einen Luftspalt 11 wird durch ein bestromtes Wicklungssystem 3 ein Rotor 5 in Rotation um eine Achse 7 versetzt. Der Rotor 5, der koaxial zum Stator 2 angeordnet ist, weist in axial verlaufenden Ausnehmungen eines Blechpakets 30 angeordnete Permanentmagnete 9 auf, die auch als vergrabene Permanentmagnete 9 bezeichnet werden. Die Bleche 8 des Rotors 5 sind paketiert und mit einer Welle 6, zumindest abschnittsweise, drehfest verbunden.

Der Rotor 5 ist dabei über ausgewählte Bleche 8 des Blechpakets 30 oder das gesamte Blechpaket 30 und/oder ergänzend durch Verteilscheiben 16 oder Abschlussscheiben mit der Welle 6 drehfest verbunden.

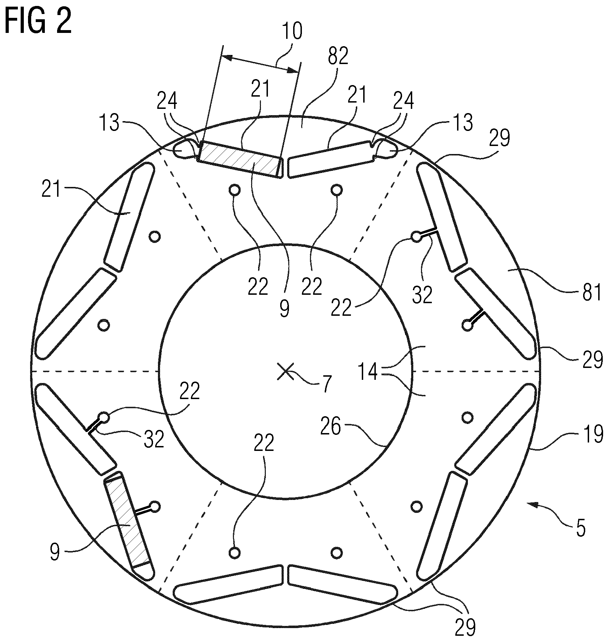

Die Ausführungen zu dem Blech 8 gemäß FIG 2 sind auch auf die Bleche der folgenden Figuren anzuwenden, sofern nicht explizit ausgeschlossen.

So zeigt FIG 2 ein Blech 8 eines Blechpakets 30, das Pole 27 bildet, die jeweils einen Sektor 14 des Bleches 8 des Rotors 5 einnehmen. Der Sektor 14 ist bezogen auf seinen in Umfangsrichtung betrachtet einnehmenden Winkel 31, d.h., umso kleiner der Winkel 31 desto hochpoliger ist der Rotor 5. Mit anderen Worten, bei einem vierpoligen Rotor 5 ist der Sektor 14 90°, bei einem sechspoligen Rotor 60°, bei einem achtpoligen Rotor 45° usw.

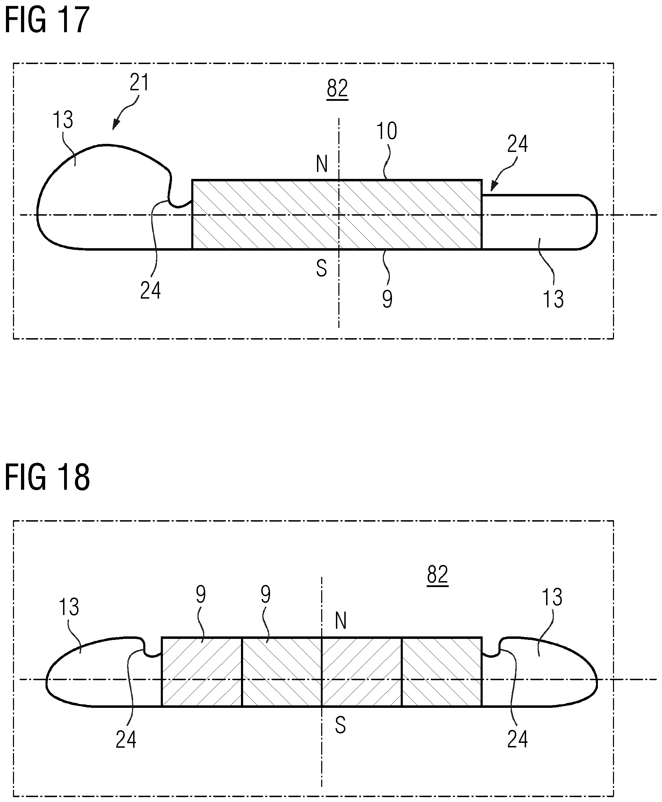

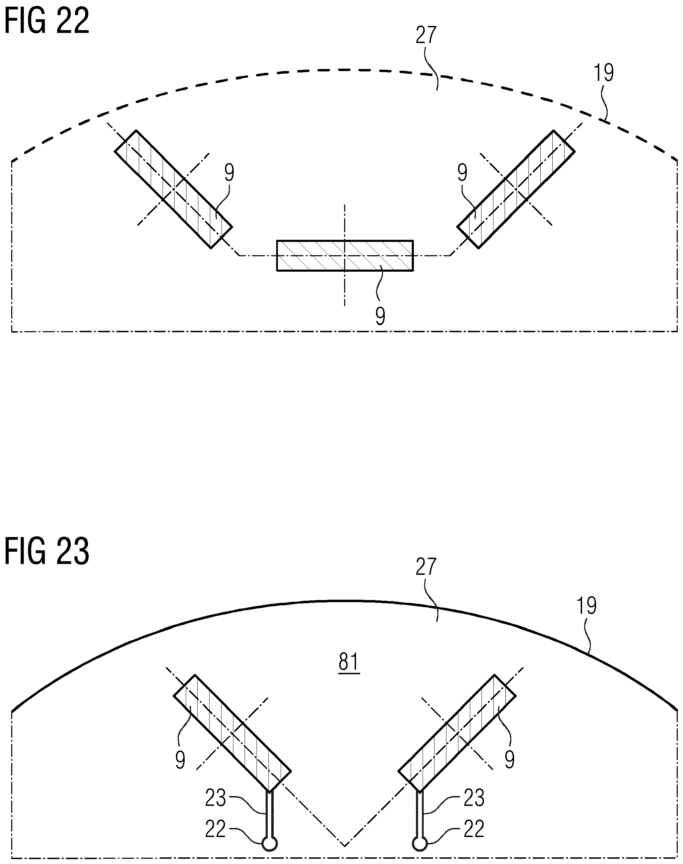

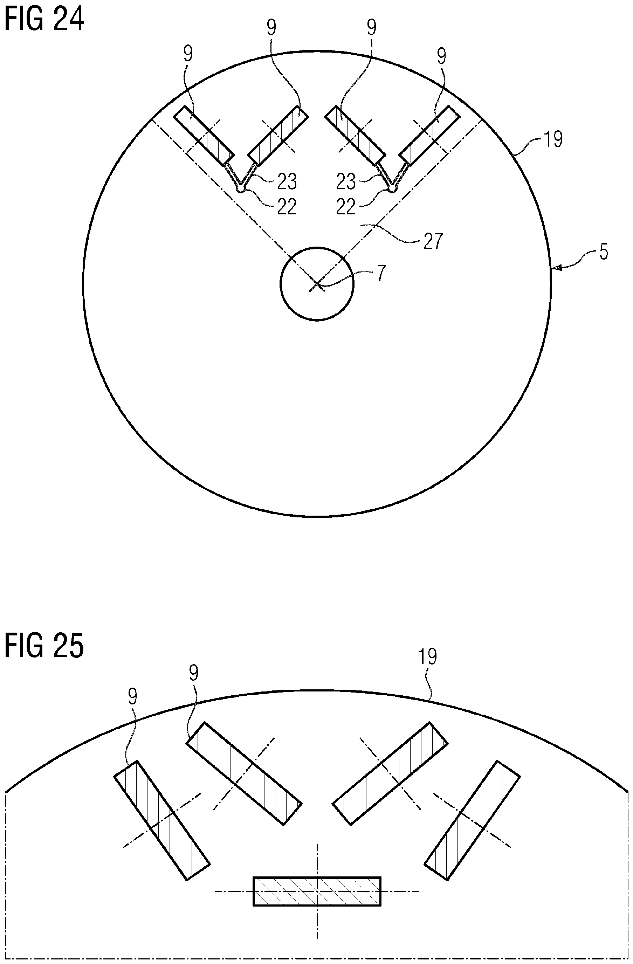

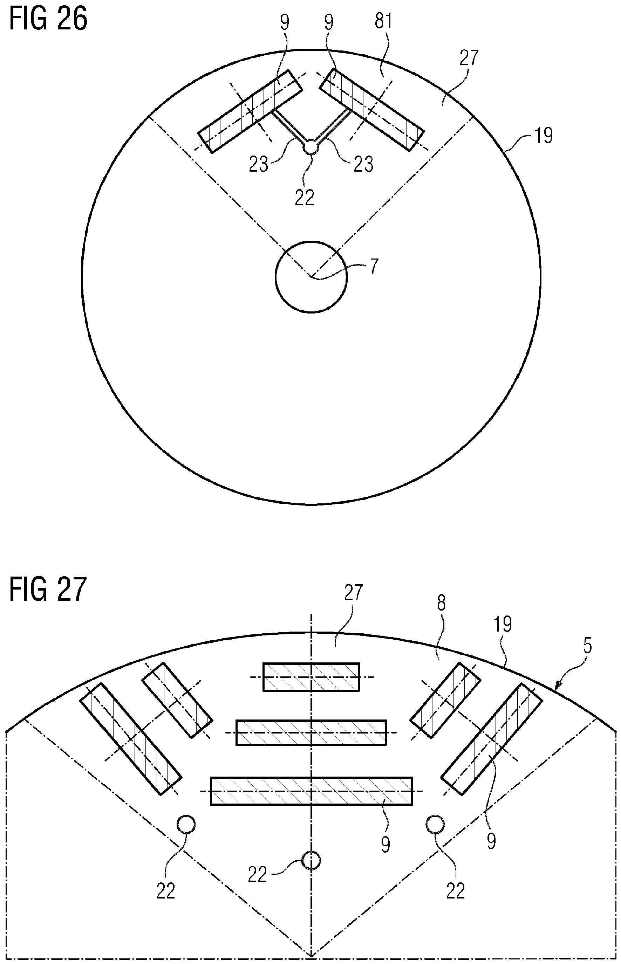

In dieser sechspoligen Ausführung ist der Pol 27 durch zwei V-förmig angeordnete Permanentmagnete 9 gebildet. Die Pole 27 des Rotors 5 können ebenso aus mehreren Permanentmagneten 9 gebildet sein, beispielsweise aus Doppel-V-förmigen Anordnungen, aus U-förmigen Anordnungen oder W-förmigen Anordnungen oder auch nur aus tangential angeordneten Permanentmagneten 9. Diese nicht abschließenden Ausgestaltungen und Anordnungen von Permanentmagneten 9 in Polen 27 sind den FIG 17 bis 27 beispielhaft zu entnehmen.

Auch in axialer Richtung sind je nach axialer Länge des Rotors 5 mehrere Permanentmagnete 9 pro Ausnehmung 21 vorgesehen.

Ausnehmungen 21 in einem Blech 8, wobei axial angeordnete Bleche 8 ein Blechpaket 30 bilden, sind dabei Ausstanzungen der einzelnen Bleche 8, die paketiert, axial hintereinander angeordnet sind. Die Ausnehmungen 21 fluchten somit axial. Die Ausnehmungen 21 weisen sowohl Taschen 10 als auch die Flusssperren 13 auf. Die Taschen 10 sind zur Aufnahme der oder des Permanentmagneten 9 vorgesehen. In den Raum der Ausnehmungen 21 ragen optional Stege und/oder Haltenasen 24 zur ergänzenden Fixierung und Halterung der Permanentmagnete 9 während der Fertigung und im Betrieb der dynamoelektrischen Maschine 1 um Fliehkraftbeanspruchungen aufzunehmen.

Die Permanentmagnete 9 sind also in den Ausnehmungen 21 angeordnet, wobei eine Ausnehmung 21 sich aus Flusssperren 13, aus gegebenenfalls optionalen Halteelementen 24 und aus Taschen 10 zusammensetzt. Die Taschen 10 sind dabei für die Aufnahme der Permanentmagnete 9 vorgesehen, die Flusssperren 13 und gegebenenfalls Halteelemente 24 dienen lediglich der Optimierung des magnetischen Flusses bzw. der Fixierung der Permanentmagnete 9 im Blechpaket 30 des Rotors 5.

Idealerweise sind die Permanentmagnete 9 ohne Spalte zu den Blechen 8 in den Ausnehmungen 21 platziert - bilden also eine lückenlose und vollflächige Anlage. Eine derartige komplementäre Anordnung ist aber aus fertigungstechnischen Gründen nicht möglich. Es entstehen, fertigungsbedingt, axial verlaufende Spalte zwischen den Permanentmagneten 9 und den Blechen 8, die geschlossen werden müssen.

Diese Bleche 8 weisen nun mehrere Sektoren 14 auf, wobei diese Sektoren 14 als erste Polsektoren 81 und zweite Polsektoren 82 ausgestaltet sind. Neben der Grundausstattung der Bleche 8, wie Wellenbohrung 26, Ausnehmungen 21, Bohrungen 22, gleiche Anzahl von Polen 27 und gleicher Außendurchmesser, weisen die ersten Polsektoren 81 Schlitze 32 zur Gestaltung von Zuflusskanäle 23 im Blechpaket 30 in die Ausnehmungen 21 auf. Die zweiten Polsektoren 82 weisen Halteelemente, u.a. wie verstärkte Randstege 29, Haltenasen 24 und Haltestege 28 zur mechanischen Verstärkung des jeweiligen Sektors 14 auf.

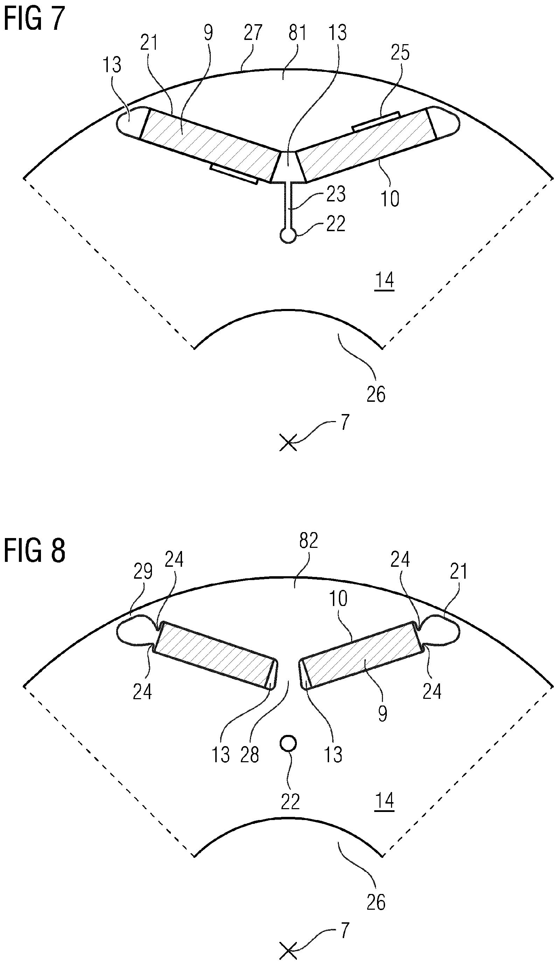

Partielle Ausstanzungen 25, wie insbesondere auch in FIG 7 dargestellt, sind vorzugsweise bei ersten Polsektoren 81 oder dritten Polsektoren 82 zugewiesen. Erste, zweite, dritte oder ggf. sogar vierte Polsektoren sind jeweils nur bei einem Pol 27 bzw. Sektor 14, oder mehreren Polen 27 vorhanden, aber nicht bei allen Sektoren 14 oder Polen 27.

Da spezifische Eigenschaften wie erster Polsektor 81, zweiter Polsektor 82 etc., mit anderen Worten, wie Schlitze 32 zur Gestaltung der Zuflusskanäle 23, Halteelemente 24 zur mechanischen Verstärkung und partielle Ausstanzungen 25 bei nur einem oder einigen - aber nicht allen - Polen 27 der Bleche 8 vorliegen, sind diese Eigenschaften im axialen Verlauf des Blechpakets 30 allen Polen 27 bzw. Sektoren 14 zuweisbar. Dabei wird während des axialen Paketierens des Blechpakets 30 durch Verdreh- und/oder Umschlagspaketierung der einzelnen Bleche 8, diese Eigenschaften gezielt den vorgesehenen Polen 27 zugewiesen.

Verdreht oder verdreht und umgeschlagen wird dabei durch einen Winkel, der sich aus der Polzahl p des Rotors 5 ergibt.

Mit anderen Worten: Umgeschlagen wird immer um 180°, so dass eine Vorderseite eines Bleches 8 zu einer Rückseite des Bleches 8 wird. Verdreht wird immer um einen Winkel 31 des Sektors 14, mit anderen Worten, z.B. bei einem sechspoligen Rotor 5 um 60° oder ein ganzzahliges Vielfaches (2-, 3- oder 4-fach) davon.

Ein weiterer Vorteil ist, dass durch das Verdrehen der Bleche 8 Anisotropien aus den Materialeigenschaften des Bleches (Festigkeit und magnetische Eigenschaften sind beispielsweise abhängig von der Walzrichtung bei der Herstellung der Bleche) egalisiert werden. Über die axiale Länge des Blechpakets 30 des Rotors 5 betrachtet, führt dies zu einer Homogenisierung der magnetischen Eigenschaften des gesamten Blechpakets 30, was zur Steigerung der Effizienz und zur Laufruhe der dynamoelektrischen Maschine 1 beiträgt.

Weitergehende Optimierungen durch die jeweiligen Polsektoren 81 und 83 sind definierte partielle Ausstanzungen 25 an den Taschen 10, die durch Form und Lage definierte Kapillaren bilden, die zur sicheren Fixierung der Permanentmagnete 9 durch Verkleben/Vergießen in den Taschen 10 beitragen. Dies gestattet beim Herstellungsprozess des Rotors 5 eine größere Auswahl hinsichtlich der Viskosität der einsetzbaren Kleber/Vergussmassen.

Ebenso ist es möglich die Taschen 10 unabhängig von einer Ausgestaltung gemäß erstem, zweitem etc. Polsektor mit partiellen Ausstanzungen 25 auszuführen, um axial durchgängig gegebenenfalls sogar mäandernd oder zumindest axial abschnittsweise Kapillare zu erhalten.

Weitere Optimierungen der jeweiligen Bleche 8 sind hinsichtlich mechanischer Festigkeit die Ausgestaltung der Halteelemente 24, die Randbegrenzungen bzw. Randstege 29 der Flusssperren 13 im Bereich der Oberfläche 19 des Rotors 5 und der Haltenasen 24, um die Permanentmagnete 9 in den Taschen 10 der Ausnehmungen 21 zu halten. Dabei kann die Anzahl, Dicke und Formgebung der Halteelemente, Stege 24 und Randstege 29 je nach Anforderung beim Stanzvorgang vorgegeben werden.

Bei den ersten Polsektoren 81 eines Bleches 8 wird durch die Formgebung und Dimensionierung des Schlitzes 32 die Bildung eines Zuflusskanales 23 von einer Bohrung 22 zu einer Ausnehmung 21 vorgegeben. Bei der Dimensionierung der Schlitze 32 sind ebenfalls die einsetzbaren Kleber und Vergussmaterialien zu beachten.

Die Zuflusskanäle 23 erlauben ein sicheres Fixieren (z.B. Verkleben/Vergießen) der Permanentmagnete 9 in den jeweiligen Taschen 10. Die Verabreichung des Klebers oder der Vergussmasse erfolgt mit oder ohne Druck.

Die im Rotor 5 vorhandenen Ausnehmungen 21 weisen dann, im axialen Verlauf betrachtet, alle Möglichkeiten der Einzeloptimierung auf. Je nach Drehzahlanforderungen und damit verbundenen Fliehkraftbeanspruchungen, dem vorgesehenen Vergussmaterial etc., sind dementsprechend die Sektoren 14 der Bleche 8 mit einem ersten Polsektor, zweiten Polsektor 82, dritten Polsektor 83 und deren axiale Reihung und Verdrehung und/oder Umschlagung ausgeführt, um ein Blechpaket 30 zu erhalten.

Zusätzlich oder stattdessen können die Bleche 8, um eine mechanische Stabilität des Blechpakets 30 zu erhalten, die einzelnen Bleche 8 nach vorgebbarer axialer Reihenfolge, unter Verdrehen und/oder Umschlagen zumindest zum Teil miteinander verklebt werden. Damit können gegebenenfalls Haltestege 28 oder Randstege 29, die der Stabilisierung des Blechpakets 30 dienen mit geringeren Dimensionen ausgeführt werden oder was die Haltestege betrifft sogar entfallen. Diese Reduzierung der Stege reduziert den magnetischen Streufluss.

Im axialen Verlauf des Blechpakets 30 werden somit durch die gezielte Optimierung einzelner Ausnehmungen eines Sektors 14 durch erste, zweite Polsektoren, insbesondere der Taschen 10 hinsichtlich einer Anforderung, die negativen Auswirkungen auf andere Anforderungen deutlich reduziert.

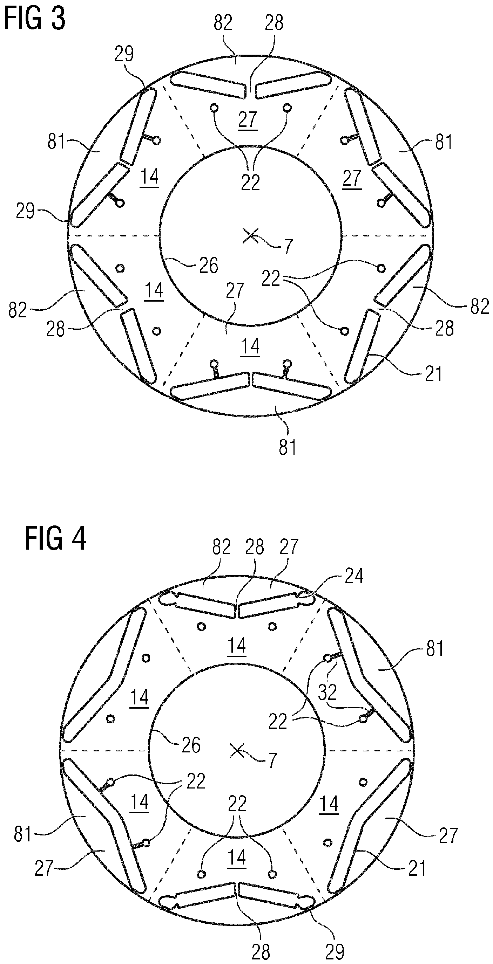

FIG 3 zeigt ein anderes Blech 8 eines sechspoligen Rotors 5, bei dem jeder Sektor 14 abwechselnd eine Ausgestaltung nach einen ersten Polsektor 81 und nach einem zweiten Polsektor 82 aufweist.

FIG 4 zeigt ein anderes Blech 8 eines sechspoligen Rotors 5, bei dem sich Sektoren 14 mit Ausgestaltungen nach einem ersten Polsektor 81 und einem zweiten Polsektor 82 gegenüberliegen. Die verbleibenden gegenüberliegenden Sektoren 14, können lediglich die Grundausstattung oder partielle Ausstanzungen 25 nach dem dritten Polsektor 83 aufweisen.

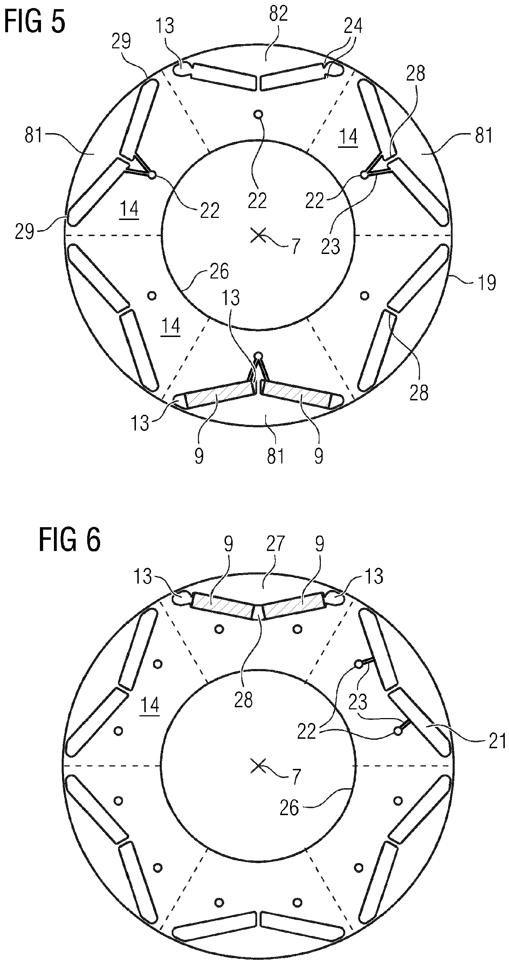

FIG 5 zeigt ein anderes Blech 8 eines sechspoligen Rotors 5, das in jedem Sektor 14 nur eine Bohrung 22 aufweist, die zwei Zuflusskanäle 23 zu den jeweiligen Ausnehmungen 21 aufweist. Es liegen sich dabei wieder Sektoren 14 mit Ausgestaltungen nach einem ersten Polsektoren 81 und einem zweiten Polsektor 82 gegenüber. Die ersten Polsektoren weisen dabei auch Haltestege 28 auf.

FIG 6 zeigt ein anderes Blech 8 eines sechspoligen Rotors 5, bei dem die ersten Polsektoren 81 Haltestege 28 und zweite Polsektoren 82 sogar verstärkte Haltestege 28 aufweisen. Dies ist besonders bei hohen Drehzahlen wichtig. Jede Ausnehmung 21 hat bei den ersten Polsektoren einen eigenen Zuflusskanal 23.

FIG 7 zeigt eine Detaildarstellung eines Sektors 14 eines vierpoligen Rotors 5, der als erster Polsektor 81 ausgeführt ist. Die Ausnehmung 21 ist V-förmig ausgestaltet und weist einen Zuführkanal 23 in die radial weiter innenliegende Flusssperre 13 auf. Die Taschen 10, wo sich die Permanentmagnete 9 befinden, weisen in dieser Ausführung partielle Ausstanzungen 25 der Taschen 10 auf.

FIG 8 zeigt eine Detaildarstellung eines Sektors 14 eines vierpoligen Rotors 5, der als zweiter Polsektor 82 ausgeführt ist. Die Permanentmagnete 9 sind V-förmig angeordnet die durch einen Haltesteg 28 getrennt sind. Haltenasen 24 fixieren die Permanentmagnete 9 in den Ausnehmungen 21.

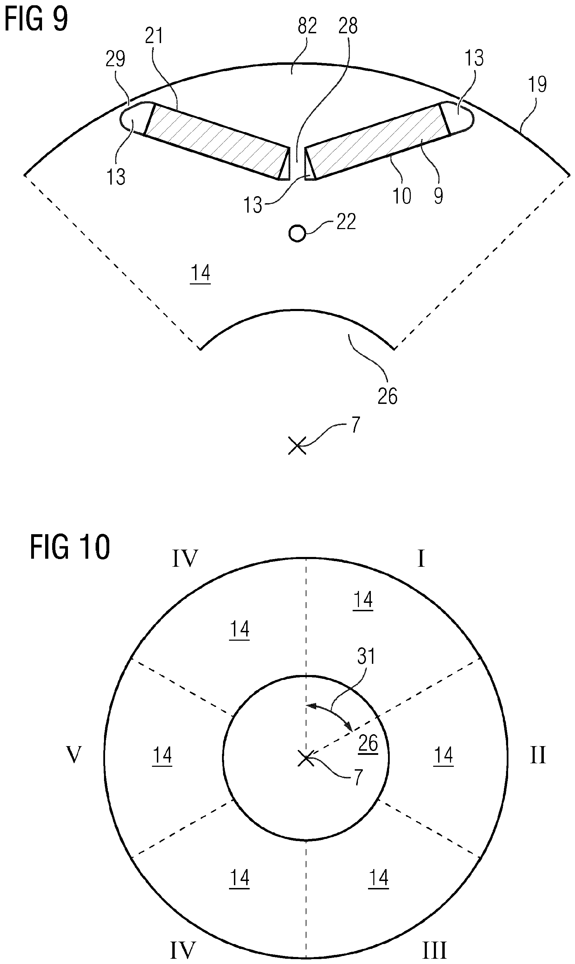

FIG 9 zeigt eine Detaildarstellung eines Sektors 14 eines vierpoligen Rotors 5, der mit einem zweiten Polsektor ausgestattet ist. Er weist verstärkte Randstege 29 und einen Haltesteg 28 zwischen den beiden Ausnehmungen 21 dieses Poles bzw. Sektors 14 auf. Die Taschen 10 und die Flusssperren 13 sind in dieser Ausführung so ausgelegt, dass innerhalb der Ausnehmung 21 keine weiteren Haltenasen 24, wie beispielsweise in FIG 8 vorgesehen sind.

FIG 10 zeigt die Anordnung der Sektoren 14 eines Blechpakets 30 eines sechspoligen Rotors 5, und deren, in Umfangsrichtung betrachtet, zugewiesenen Positionierung I bis VI.

Bei der Stapelung bzw. Paketierung des Blechpakets 30 können nunmehr beispielsweise Bleche 8 nach FIG 2 erfindungsgemäß folgendermaßen angeordnet werden.

Eine vorgebbare Anzahl von Blechen 8 wird axial so angeordnet, dass Sektoren 14 mit Ausgestaltung zweite Polsektoren 82 an Position I sind. Das bedeutet, dass dementsprechend Sektoren 14 mit Ausgestaltung erster Polsektor 81 an Position II sind. Nachdem das Blech 8 nach FIG 2 bei gegenüberliegenden Sektoren 14 gleiche Ausstattungen nach erstem und zweitem Polsektor 81, 82 hat, bedeutet das, dass die Ausstattung nach zweitem Polsektor 82 auch an Position IV ist. Ebenso bedeutet das, dass die Ausstattung nach erstem Polsektor 81 auch an Position V ist. Die Ausstattung des Bleches an Position III und VI kann eine Grundausstattung oder eine Ausstattung nach einem dritten Polsektor 83 sein.

Erfindungsgemäß wird nunmehr nach diesem ersten Stapel, ein zweiter Stapel bzw. vorgegebene Anzahl von Blechen 8 nach FIG 2, um zumindest einen Winkel 31, also eine Polteilung gedreht. D.h., dass nunmehr die Sektoren 14 mit der Ausstattung zweiter Polsektor 82 an Position II des Blechpakets 30 befinden. Die Sektoren 14 mit der Ausstattung nach erstem Polsektor 81 sind nunmehr an Position III. Auch die Ausgestaltungen der gegenüberliegenden Sektoren 14 sind im Uhrzeigersinn betrachtet um eine Position weitergedreht worden, also auf Position V und VI.

Diese Art der Stapelung bzw. Paketierung wird über die gesamte Länge des Blechpakets 30 fortgesetzt. Mit anderen Worten: Über die axiale Länge des Blechpakets 30 betrachtet ergeben sich immer wieder Positionen I bis IV die unterschiedlichen Ausgestaltungen ihrer Sektoren 14 aufweisen. Somit werden u.a. lediglich axial abschnittweise Zuführkanäle 23 von den Bohrungen 22 zu den Ausnehmungen 21 gebildet (Ausgestaltung erster Polsektor 81) und mechanische Verstärkung (Ausgestaltung zweiter Polsektor 82) gebildet.

Optional können die Bleche 8 dabei auch verklebt werden.

Nach dem Paketieren werden die Permanentmagnete 9 axial in die Ausnehmungen 21 eingesetzt.

Danach wird eine Verteilscheibe 16 an einer oder beiden Seiten des Blechpakets 30 dichtend angebracht. Über die Verteilscheibe 16 wird - wie später beschrieben - das Blechpaket 30 vergossen.

Anstatt einer Drehung um einen Winkel 31 kann auch eine Drehung und Umschlagung der Bleche 8 erfolgen.

Diese Art der Stapelung der Bleche 8 lässt sich auch auf die beispielhaft dargestellten - aber nicht abschließend aufgezeigten - Blechschnitte nach den Figuren 3 bis 6 übertragen.

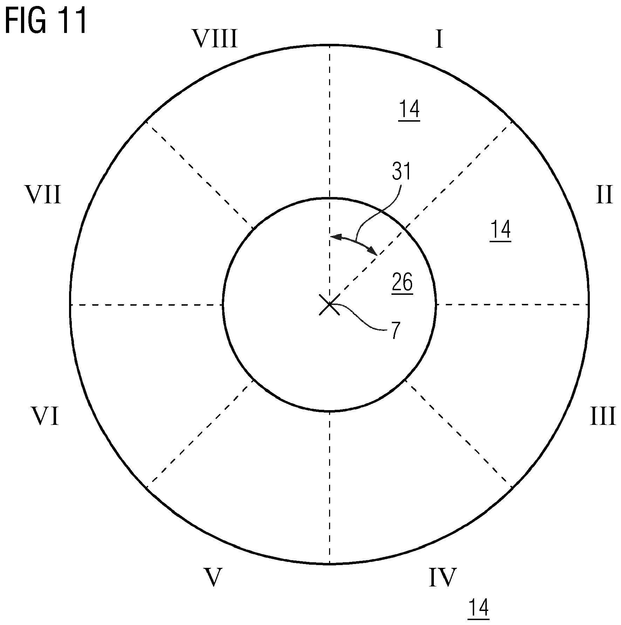

FIG 11 zeigt die Anordnung der Sektoren 14 eines achtpoligen Rotors 5, und deren in Umfangrichtung betrachtet zugewiesenen Positionierung I bis VIII. Die Ausführung zu FIG 10 sind sinngemäß auch auf FIG 11 zu übertragen.

Dies gilt ebenso für vierpolige, zehnpolige, zwölfpolige Rotoren 5.

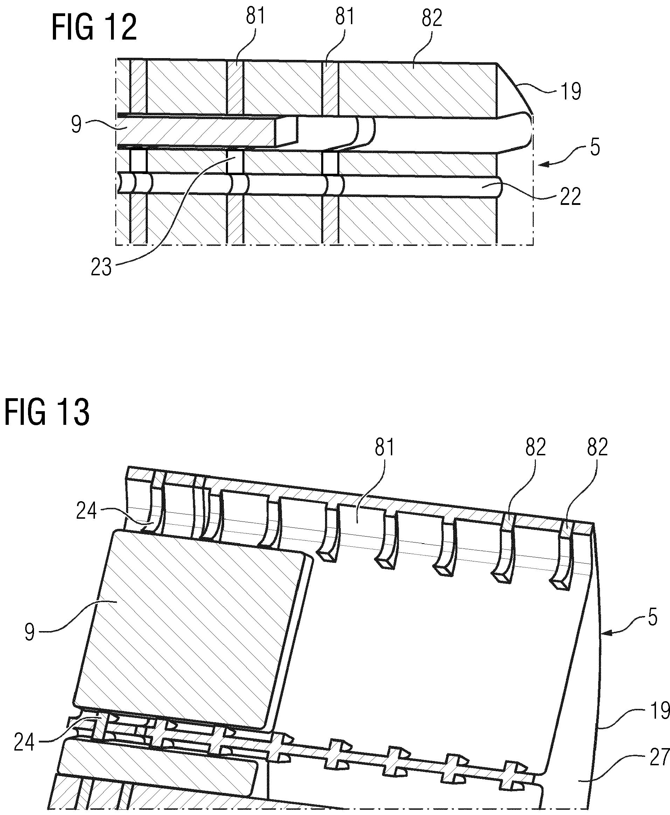

FIG 12 zeigt in einer detaillierteren Darstellung die Ausführungen nach FIG 2, wobei dort die Spalte 12 zwischen den Blechen 8 des Rotors 5 und den Permanentmagneten 9 besser dargestellt sind. Dabei ist zu erkennen, dass die Spalte 12 zwischen den Blechen 8 und den Permanentmagneten 9 zumindest abschnittsweise Ausdehnungen aufweisen können, um den Füllvorgang durch die Vergussmasse 20 zu erleichtern. Diese sind beispielhaft in FIG 7 als partielle Ausstanzungen 25 gezeigt.

FIG 13 zeigt in perspektivischer Darstellung einen Schnitt durch ein derartiges Blechpaket 30, wobei in einer Ausnehmung 21 ein Permanentmagnet 9 dargestellt ist, der sich axial über Zuflusskanäle 23 erstreckt. Zweite Polsektoren 82 fixieren dabei den Permanentmagneten 9. Das hat den Vorteil, dass bei den axial folgenden Blechen eine derartige Positionierung nicht notwendig ist, da sich die Permanentmagnete 9 über eine gewisse vorgebbare axiale Länge innerhalb des Blechpakets 30 erstrecken.

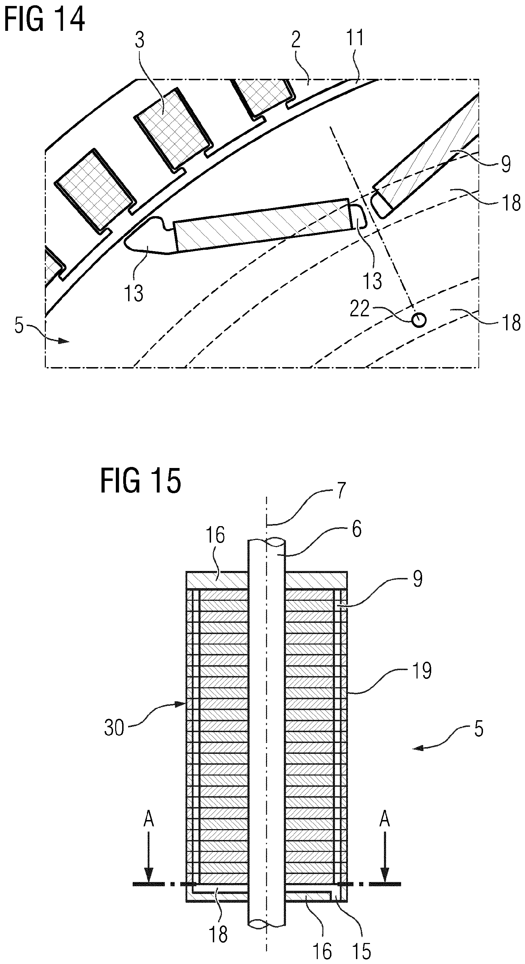

FIG 14 zeigt einen Ausschnitt einer dynamoelektrischen Maschine 1, mit einem Wicklungssystem 3, das bei Bestromung ein Magnetfeld erzeugt, das durch elektromagnetische Wechselwirkung mit dem mit Permanentmagneten 9 versetzten Rotor 5 ein

Drehmoment erzeugt. Dem Pol 27, der durch zwei v-förmig angeordnete Permanentmagnete 9 in ihren Ausnehmungen gebildet ist, wird die Vergussmasse 20 oder Kleber über die Bohrung 22 und den Zuflusskanal 23 und/oder die Flusssperren 13 zugewiesen. In dieser Darstellung ist der Pol 27 mit einem zweiten Polsektor 82 ausgebildet. Ringkanäle 18 und Zuflusskanäle 23 sind axial von dieser Ansicht beabstandet und deshalb nur gestrichelt dargestellt. Die Bohrung 22 ist, wie gehabt, für die Verteilung der Vergussmasse 20 bei der Herstellung verantwortlich.

FIG 15 zeigt einen Rotor 5, dessen Blechpaket 30 durch zwei Endscheiben paketiert ist, wobei zumindest eine Endscheibe als Verteilscheibe 16 ausgeführt ist. Diese Verteilscheibe 16 weist auf der einer Stirnseite des Blechpakets 30 zugewandten Seite zumindest einen Ringkanal 18 auf, der über eine Zuführung 15 füllbar ist. Über diese Zuführung 15 wird nunmehr der Ringkanal 18 und gegebenenfalls weitere Erweiterungen 17 mit einem Vergussmaterial, insbesondere einem thixotropischen Material oder einem Kleber unter Druck beaufschlagt.

Ein Paketieren der Bleche 8 kann auf einer Hilfswelle erfolgen. Ebenso ist es möglich die Bleche 8 zu verkleben. Ebenso ist Stanzpaketieren der Bleche 8 möglich, um einen Blechpaket des Rotors 5 zu erhalten in das die Permanentmagnete 9 einsetzbar sind.

Die Verteilscheibe 16 kann auch mehrere Zuführungen 15 aufweisen, um die zuführbare Menge an Vergussmaterial zu steigern.

Das Blechpaket 30 und/oder die Verteilscheiben 16 werden vorzugsweise auf die Welle 6 geschrumpft. Ebenso sind andere Möglichkeiten vorhanden, das Drehmoment vom Blechpaket 30 auf die Welle 6 zu übertragen, wie Passfederverbindungen etc. Eine Paketierung des Blechpakets 30 kann auch über Zugankerverbindungen erfolgen.

Zusätzliches Paketieren erfolgt dann, wenn sich das Blechpaket 30 auf der eigentlichen Welle 6 befindet. Dabei wird das Blechpaket 30 mittels zweier Scheiben, insbesondere zumindest einer Verteilscheibe 16, zusammengepresst.

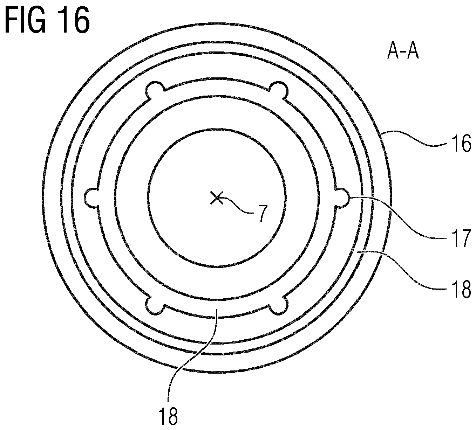

FIG 16 zeigt einen Schnitt durch die Verteilscheibe 16 bei der ein umlaufender, offener Ringkanal 18 vorgesehen ist und der als optionale Ausbildung Erweiterungen 17 aufweist, die jeweils einen Pol des Rotors 5 mit einer Vergussmasse 20 versorgen.

Die Verteilscheibe 16 weist auf der dem Blechpaket 30 des Rotors 5 zugewandten Seite zumindest einen umlaufenden zum Blechpaket 30 hin offenen Ringkanal 18 auf, der auf Höhe der Bohrungen 22 verläuft. Der Ringkanal 18 schließt formschlüssig und dicht mit der Stirnseite des Blechpakets 30 ab. Im Bereich der Bohrungen 22, die axial verlaufenden Kanäle bilden, weist der Ringkanal 18 optional Erweiterungen 17 auf. Damit lassen sich u.a. Verteilscheiben 16 gleichen Typs bei unterschiedlichen Blechschnitten des Rotors 5 verwenden.

Auf der dem Blechpaket 30 abgewandten Seite der Verteilscheibe 16 ist zumindest eine Injektionsöffnung, also eine Zuführung 15 vorgesehen, um den Ringkanal 18 zu speisen. Über den Ringkanal werden die Bohrungen 22 mit einer Vergussmasse gespeist. Optional weist die Verteilscheibe einen weiteren dazu konzentrischen Ringkanal auf, um über die Flusssperre der Ausnehmung eines Pols des Rotors 5, ausreichend Vergussmasse für den jeweiligen Pol 27 bereitstellen zu können.

Der Ringkanal 18 und optional dessen Erweiterung 17 schließen mit der Stirnseite des Blechpakets 30 formschlüssig und dicht ab, um einen dementsprechenden Druck der Vergussmasse oder des Klebers und damit die erforderlichen Scherkräfte aufbauen zu können.

Über die Zuführung 15 wird nunmehr die vorab, insbesondere in situ, gemischte Vergussmasse in das Blechpaket des Rotors 5 mit vorgebbarem Druck gedrückt.

Bei dieser als thixotropisches Material ausgeführte Vergussmasse stellt sich aufgrund der erhöhten Scherkräfte eine vergleichsweise geringe Viskosität ein, die der Vergussmasse ermöglicht, in die Spalte und Ausnehmungen des Blechpakets einzudringen, die von Permanentmagneten 9 eingenommen werden.

Bei dem Vergussprozess wird nunmehr die Vergussmasse unter vorgebbarem Druck reingepresst und aufgrund der geringeren Viskosität verteilt sich diese in den Flusssperren bzw. Spalten zwischen Permanentmagneten 9 im Blechpaket 30. Eine Überwachung des Drucks kann den Vorgang beenden, so dass die Vergussmasse in dem Moment, wenn die Scherkräfte reduziert werden (Druckreduktion), eine Viskositätssteigerung erfährt und somit der Vorgang des Vergießens abgebrochen wird bzw. werden kann. Sobald sich die Vergussmasse in den Spalten und Flusssperren um den Permanentmagneten 9 verteilt hat und eine weitere Ausdehnung in die Zwischenräume der Bleche ansteht, steigert sich der erforderliche Druck, der dann als Abbruchkriterium des Vergießens angezogen werden kann. Damit wird vermieden, dass die Vergussmasse beispielsweise radial zwischen die Bleche des Rotors 5 dringt und insbesondere an die Oberfläche 19 des Rotors 5 tritt.

Die Vergussmasse oder der Kleber lassen sich auch ohne externen Druck in die erforderlichen Hohlräume des Blechpakets 30 einfüllen.

FIG 16 zeigt dabei weiter eine Erweiterung 17, die optional von der Verteilerscheibe 16 und dem Ringkanal 16 in den Pol des Rotors 5 mündet.

In diesem Fall würde die Vergussmasse 20 axial über die daran anschließenden Bohrungen 22, die Zuflusskanäle 23 und die Flusssperren 13 reingedrückt werden, wobei sich dabei dann die Vergussmasse 20 den weiteren Weg zwischen den Permanentmagneten 9 und den Blechen sucht, um in die radial außen liegenden Flusssperren 13 einzudringen und diese ebenfalls zu füllen. Durch Überwachung des Drucks beim Einfüllen der Vergussmasse 20 und damit der Scherkräfte kann der Vorgang, sobald die "Ausnehmungen voll sind", abgebrochen werden. Dabei wird vermieden, dass insbesondere über die schmalen Stege 14 die Vergussmasse 20 an die Oberfläche 19 des Rotors 5 tritt.

Die Figuren 17 bis 27 zeigen Ausgestaltungen von Ausnehmungen 21 zur Aufnahme von Permanentmagneten 9 und zur Bildung von Polen 27. Aus Gründen der zeichnerischen Vereinfachung sind lediglich einige im Vorfeld genannten Ausgestaltungsmerkmale nach den ersten, zweiten etc. Polsektoren dargestellt.

Diese weiteren Figuren 17 bis 27 zeigen in nicht limitierenden oder abschließenden Ausführungen Anordnungen von Permanentmagneten 9 innerhalb eines Sektors 14 bzw. Poles 27 die eine Ausgestaltung nach dem ersten Polsektor 81 oder zweiten Polsektor 82 aufweisen können.

Dabei weist selbstverständlich jeder Permanentmagnet 9, nicht näher dargestellte Flusssperren 13 und zumindest abschnittsweise Haltelemente 24 auf.

Dabei zeigt FIG 17 eine Ausnehmung 21 eines Pols 27 einer Ausführung eines zweiten Polsektors 82, der als zusätzliches Merkmal über die Grundausstattung hinausgehend das Halteelement, wie unterschiedlich ausgeführte Haltenasen 24 aufweist.

FIG 18 zeigt eine weitere Ausgestaltung nach dem zweiten Polsektor 82, die zwei Haltenasen 24 aufweist.

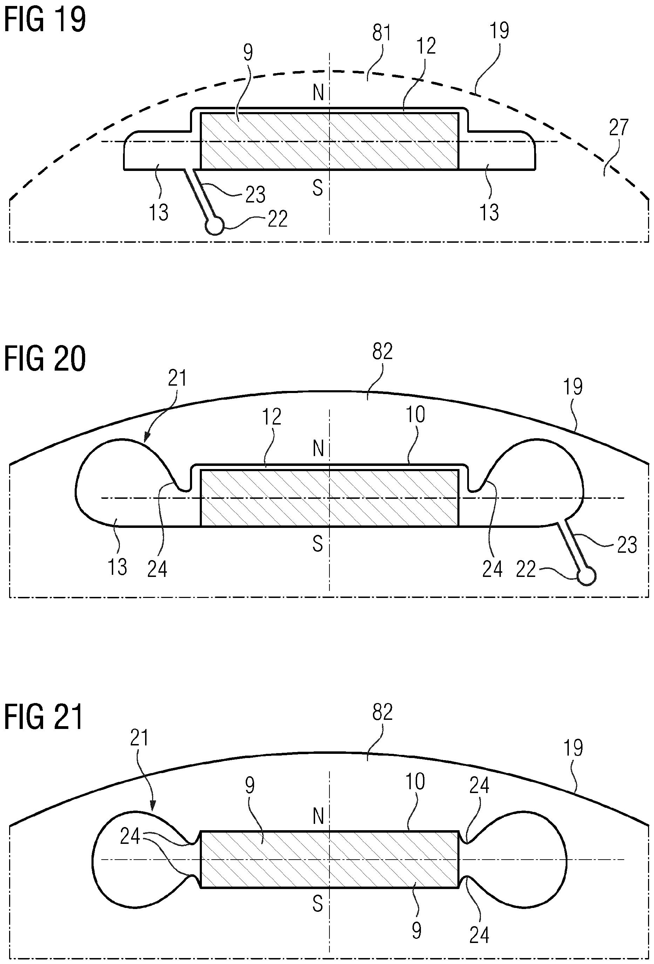

Beispielhaft ist gezeigt, was grundsätzlich bei jeder Ausnehmung 21 der Fall sein kann, dass sich die Permanentmagnete 9 in einer Tasche 10 in Umfangsrichtung und/oder axialer Richtung aus mehreren Permanentmagneten 9 zusammensetzen können. FIG 19 zeigt eine mögliche Ausführung eines Sektors 14 als ersten Polsektor 81.

Bei den Ausführungen nach FIG 19 und FIG 20 mündet der Zuflusskanal 23 jeweils in eine Flusssperre 13 der Ausnehmung 21.

Grundsätzlich wird angestrebt, die Anzahl und die Lage bzw. den Verlauf der Zuflusskanäle 23 zu minimieren oder optimieren, um im Betrieb der dynamoelektrischen Maschine den magnetischen Fluss so wenig wie möglich zu beeinträchtigen.

FIG 20 zeigt in einer möglichen Ausführung des zweiten Bleches 82 oder eines dritten Bleches 83 neben den Halteelementen 24, die partiellen Ausstanzungen 25, die die Verteilung des Klebers oder der Vergussmasse innerhalb einer Ausnehmung oder Tasche 10 erleichtern.

Eine permanenterregte Synchronmaschine mit einem erfindungsgemäßen Rotor 5, dessen Permanentmagnete 9 vergraben angeordnet und vergossen, insbesondere mit einer derartigen thixotropischen Vergussmasse fixiert sind, erreicht einen vergleichsweise hohen Wirkungsgrad und ist demnach für viele Arbeitsmaschinen, vor allem denen im Dauerbetrieb, besonders geeignet.

Die Herstellung eines derartigen Rotors 5 wird durch das erfindungsgemäße Verfahren mit der thixotropischen Vergussmasse besonders einfach.

Die einzelnen Merkmale der aufgezeigten Ausführungen können - auch wenn dies nicht explizit aufgezeigt wurde - in beliebig anderen Kombination zusammengesetzt werden, ohne den Gegenstand der Erfindung zu verlassen.

## Patentansprüche

1. Rotor (5) einer dynamoelektrischen permanenterregten Maschine (1) mit
- einer vorgebbaren Anzahl von Polen (27),
- wobei die Pole (27) des Rotors (5) jeweils durch einen oder mehrere Permanentmagnete (9) gebildet sind,
- wobei die Permanentmagnete (9) in im Wesentlichen axial verlaufenden, umfänglich geschlossenen Ausnehmungen (21) eines Blechpakets (30) angeordnet sind und Polsektoren bilden,
- wobei die Ausnehmungen (21), Bereiche von Taschen (10), zur Aufnahme der Permanentmagnete (9) und Flusssperren (13), zur Führung eines Magnetflusses aufweisen, in welche Ausnehmungen (21) zumindest abschnittsweise Halteelemente (24) ragen,
- wobei radial innerhalb jedes Poles (27) in seinem Sektor (14) ein oder mehrere axial verlaufende Bohrungen (22) im Blechpaket (30) vorgesehen sind,
- wobei das Blechpaket (30) Bleche (8) aufweist, deren Sektoren (14) mit zumindest zwei unterschiedlichen Polsektoren (81,82,83,84) ausgestattet sind und wobei das Blechpaket (30) in vorgebbarer axialer Reihenfolge und Drehung oder axialer Reihenfolge und Drehung und Umschlagung der Bleche (8), aufgebaut ist, wobei die Bleche (8) unabhängig von der Ausgestaltung der Sektoren (14) jeweils eine Wellenbohrung (26), jeweils axial fluchtende Bohrungen (22), identische Anzahl von Polen (27) bzw. Sektoren (14), axial fluchtende Ausnehmungen (21) und identischen Außendurchmesser aufweisen,
- wobei erste Polsektoren (81) Elemente zur Verteilung einer Vergussmasse oder eines Klebers innerhalb des Blechpakets aufweisen und/oder zweite Polsektoren (82) Halteelemente zur mechanischen Festigkeit des Blechpakets (30) aufweisen,
- wobei die Zuflusskanäle (23), die Flusssperren (13), die Bohrungen (22) und die im Wesentlichen axial verlaufenden Spalte zwischen dem Permanentmagneten (9) und dem jeweilig ihn umgebenden Blechpaket (3) durch einen Kleber und/oder eine Vergussmasse ausgefüllt sind.

2. Rotor (5) einer dynamoelektrischen permanenterregten Maschine (1) nach Anspruch 1, **dadurch gekenn-zeichnet**, dass erste Polsektoren (81) zusätzlich zumindest bei einem Pol (27), Schlitze (32) ausgehend von der zugordneten Bohrung (22) zu der zugehörigen Ausnehmung (21) bzw. Ausnehmungen (21) des Pols (27) aufweisen, so dass sich nach einer sich wiederkehrenden axialen Abfolge von einer vorgebbaren Anzahl von Blechen (8) wechselnde Zuflusskanäle (23) zu allen Polen (27) gebildet sind.

3. Rotor (5) einer dynamoelektrischen permanenterregten Maschine (1) nach Anspruch 1 oder 2, **dadurch gekennzeichnet, dass** die Zuflusskanäle (23) jeweils eine axiale Ausdehnung von ein, oder zwei oder mehreren axialen Blechdicken aufweisen.

4. Rotor (5) einer dynamoelektrischen permanenterregten Maschine (1) nach einem der vorhergehenden Ansprüche, **dadurch gekennzeichnet, dass** die Halteelemente (24) der zweiten Polsektoren (82) der Bleche (8) als Haltestege (28) und/oder Haltenasen (24) und/oder Randstege (29) im Bereich der Ausnehmungen (21) aufweisen.

5. Rotor (5) einer dynamoelektrischen permanenterregten Maschine (1) nach einem der vorhergehenden Ansprüche, **dadurch gekennzeichnet, dass** der erste Polsektor (81) oder ein dritter Polsektor (83) der Bleche partielle Ausstanzungen (25) der Taschen (10) aufweist.

6. Rotor (5) einer dynamoelektrischen permanenterregten Maschine (1) nach einem der vorhergehenden Ansprüche, **dadurch gekennzeichnet, dass** partiellen Ausstanzungen (25) im axialen Verlauf der Tasche (10) betrachtet mäandern.

7. Rotor (5) einer dynamoelektrischen permanenterregten Maschine (1) nach einem der vorhergehenden Ansprüche, **da** - **durch gekennzeichnet**, dass an zumindest einer Stirnseite des Blechpakets (30) des Rotors (5) eine Verteilscheibe (16) für einen Kleber und/oder Vergussmaterial vorgesehen ist.

8. Rotor (5) einer dynamoelektrischen permanenterregten Maschine (1) nach Anspruch 7, **dadurch gekenn-zeichnet**, dass die Verteilscheibe (16) einen Ringkanal (18) zumindest auf Höhe der Bohrungen (22) aufweist.

9. Rotor (5) einer dynamoelektrischen permanenterregten Maschine (1) nach Anspruch 8, **dadurch gekenn-zeichnet**, dass die Verteilscheibe (16) einen zweiten Ringkanal (18) auf Höhe der radial weiter innenliegenden Flusssperren (13) aufweist.

10. Rotor (5) einer dynamoelektrischen permanenterregten Maschine (1) nach einem der vorhergehenden Ansprüche, **dadurch gekennzeichnet, dass** eine Einmündung des Zuflusskanals (23) in die Ausnehmung (21) des zugeordneten Pols (27) an ersten Polsektoren (81) erfolgt und dort in die Ausnehmung (21) eintritt, wo die geringste Beeinträchtigung des magnetischen Flusses im Betrieb der dynamoelektrischen Maschine (1) eintritt.

11. Verfahren zur Herstellung eines Rotors (5) einer dynamoelektrischen permanenterregten Maschine (1) nach Anspruch 1 durch folgende Schritte:
- Paketieren eines Blechpakets (30) aus axial geschichteten identischen Blechen (8), dessen Sektoren (14) zumindest mit zwei unterschiedlichen Polsektoren (81,82,83,84) ausgestattet sind, wobei die Bleche (8) durch axiale Reihenfolge und Drehung oder axialer Reihenfolge und Drehung und Umschlagung das Blechpaket (30) bilden, wobei die Bleche (8) unabhängig von der Ausgestaltung der Sektoren (14) jeweils eine Wellenbohrung (26), jeweils axial fluchtende Bohrungen (22), identische Anzahl von Polen (27) bzw. Sektoren (14), axial fluchtende Ausnehmungen (21) und identischen Außendurchmesser aufweisen,
- wobei erste Polsektoren (81) Elemente zur Verteilung einer Vergussmasse oder eines Klebers innerhalb des Blechpakets aufweisen und zweite Polsektoren Halteelemente zur mechanischen Festigkeit des Blechpakets (30) aufweisen,
- Einsetzen von Permanentmagneten (9) in die Ausnehmungen (21),
- Anbringen einer Verteilscheibe (16) an zumindest einer Stirnseite des Blechpakets (30), mit zumindest einer Zuführöffnung (15) und zumindest einem Ringkanal (18) auf der dem Blechpaket (30) zugewandten Seite, der die Bohrungen (22) bedeckt,
- Vergießen der Hohlräume des Blechpakets über die Zuführöffnung und den Ringkanal (18) der Verteilscheibe (16), die Bohrungen (22), die Zuflusskanäle (23), die Flusssperren (13), und die im Wesentlichen axial verlaufenden Spalte zwischen dem Permanentmagneten (9) und dem jeweilig ihn umgebenden Blechpaket (30), durch einen Kleber und/oder eine Vergussmasse, so dass zumindest die Permanentmagnete (9) des Rotors (5) fixiert werden.

12. Verfahren zur Herstellung eines Rotors (5) einer dynamoelektrischen permanenterregten Maschine (1) nach Anspruch 11, **dadurch gekennzeichnet, dass** die Bleche (8) mit einem ersten Polsektor (81) auf einer Position I nach einer vorgebbaren Anzahl von weiteren Blechen (8), insbesondere um einen Pol (27) bzw. Sektor (14) weitergedreht werden, so dass jeder Pol (27) in vorgebbaren axialen Abständen Zuflusskanäle (23) aufweist, indem die Position der ersten Polsektoren von I bis zur Polzahl des Rotors (5) eingenommen wird.

13. Verfahren zur Herstellung eines Rotors (5) nach Anspruch 11 oder 12, **dadurch gekennzeichnet, dass** über zumindest eine Zuführöffnung (15) der Verteilscheibe (16), den Bohrungen (22), den Zuflusskanälen (23) Vergussmasse oder Kleber, insbesondere eine thixologische Vergussmasse mittels eines vorgebbaren (ohne Druck und mit Druck) Druckes in den Rotor (5), insbesondere in die Ausnehmungen (21) gegeben wird.

14. Dynamoelektrische Maschine, insbesondere permanenterregte Synchronmaschine mit einem Rotor (5) nach einem der Ansprüche 1 bis 10 und/oder einem Rotor (5) hergestellt nach einem der Ansprüche 11 bis 13.

15. Verwendung einer dynamoelektrischen Maschine (1), insbesondere einer permanenterregten Synchronmaschine bei Kompressoren, Verdichtern, Pumpen, Lüftern, Antrieb von Förderbändern, in der Nahrungsmittelindustrie, in maritimen Anwendungen etc.
